# EUROPÄISCHE PATENTSCHRIFT

(11) **EP 2 596 218 B1**
(45) Veröffentlichungstag und Bekanntmachung des Hinweises auf die Patenterteilung: **05.11.2014**
(21) Anmeldenummer: 11736093.3
(22) Anmeldetag: 23.07.2011
(51) Int. Cl.: B01J 19/00, F01K 3/00, F28D 20/02, F28D 20/00, F22B 1/02, C10L 5/44, C10L 9/08, B01J 3/00

(54) **VORRICHTUNG ZUM SPEICHERN VON WÄRME UND VERFAHREN ZUM BETRIEB EINER WENIGSTENS EINEN WÄRMENUTZER AUFWEISENDEN ANLAGE**
DEVICE FOR STORING HEAT AND METHOD FOR OPERATING A PLANT COMPRISING AT LEAST ONE HEAT-CONSUMER
DISPOSITIF ACCUMULATEUR DE CHALEUR ET PROCÉDÉ POUR L'OPÉRATION D'UNE INSTALLATION ABRITANT AU MOINS UN UTILISATEUR DE CHALEUR

(30) Priorität: 20.11.2010 DE 102010044200; 23.07.2010 DE 102010032159
(43) Veröffentlichungstag der Anmeldung: 29.05.2013
(73) Patentinhaber: Addlogic Labs GmbH, 71131 Jettingen (DE)
(72) Erfinder: HAFEN, Ulrich, 89542 Herbrechtingen (DE); KLOTSCHE, Michael, 01809 Heidenau (DE); VON STACKELBERG, Burkhard, 70569 Stuttgart (DE); TJIOK, Dave, 71032 Böblingen (DE)
(74) Vertreter: Gauss, Nikolai
(86) Internationale Anmeldenummer: PCT/EP2011/062693
(87) Internationale Veröffentlichungsnummer: WO 2012/010709

(56) Entgegenhaltungen:
- WO-A1-79/01004
- WO-A1-03/067168
- WO-A2-2008/154455
- DE-A1- 3 905 346
- DE-A1- 19 815 521
- DE-U1- 9 418 656
- GB-A- 1 285 901
- JP-A- 60 048 499

## Beschreibung

Die Erfindung betrifft eine Vorrichtung zum Speichern von Wärme mit einem Wärmespeicherbehälter, der Wärmespeichermedium enthält und der eine Öffnung für den Durchtritt eines fluiden Wärmeträgers von und/oder zu einem Wärmenutzer hat. *Darüber hinaus betrifft die Erfindung eine Wärmespeichervorrichtung sowie eine Anlage mit wenigstens einem Wärmenutzer, der mit einer Vorrichtung zum Speichern von Wärme verbunden ist, und ein Betriebsverfahren für eine Anlage mit wenigstens einem Wärmenutzer und einer Vorrichtung zum Speichern von Wärme.*

Für das Speichern von Wärme sind insbesondere sogenannte Ruths-Speicher bekannt. Diese Speicher haben einen Speicherbehälter, in dem sich flüssiges Wasser befindet. Um einen Ruths-Speicher zu beladen strömt Wasserdampf in den Speicherbehälter direkt in das flüssige Wasser. Der Wasserdampf kondensiert im Wasser und das Wasser erwärmt sich dadurch und speichert die Wärmeenergie als fühlbare Wärme. Daraus folgt ein Anstieg des Dampfdrucks im Speicher. Um den Ruths-Speicher zu entladen wird Wasserdampf aus dem Speicherbehälter entnommen, wodurch der Dampfdruck im Speicher abnimmt. Ruths-Speicher finden z. B. Anwendung beim Betrieb von Dampfspeicherlokomotiven.

*In der* GB 1 285 901 A *ist eine Anlage zum Heizen beschrieben, die eine Vorrichtung zum Speichem von Wärme mit einem Wärmespeicherbehälter aufweist. Der Wärmespeicherbehälter ist mit einem Wärmespeichermedium befüllt. Dieses Wärmespeichermedium ist in thermischem Kontakt mit einer Wärmetauscherrohrleitung, die mit einem Wärmeträger-Kondensatbehälter verbunden ist und über eine Dampfleitung mit einem Wärmenutzer kommuniziert.*

*Die* DE 39 05 346 A1 *offenbart eine Vorrichtung zum Speichern von Wärme mit einem Wärmespeicherbehälter, der mit einem Feststoff-Gas-Reaktions-Speichermaterial befüllt ist. Indem das Speichermaterial in dem Behälter mit einem gasförmigen Wärmeträger umströmt wird kann in das Speichermaterial Wärme eingespeichert oder dem Speichermaterial entzogen werden.*

Aufgabe der Erfindung ist es, *das Speichem von Wärme zu ermöglichen, indem* Wärme aus einem Fluid, z. B. aus Dampf, insbesondere Wasserdampf, in *eine* Vorrichtung *zum Speichem von Wärme* und umgekehrt bei minimaler Änderung der Entropie *übertragen wird.*

Diese Aufgabe wird durch eine Vorrichtung zum Speichern von Wärme ge*mäß Anspruch 1 und ein Verfahren nach Anspruch 17 gelöst. Vorteilhafte Ausführungsformen der Erfindung sind in den abhängigen Ansprüchen angegeben. Erfingdungsgemäß ist bei der Vorrichtung zum Speichern von Wärme in* dem Wärmespeicherbehälter wenigstens eine mit dem Wärmespeichermedium thermisch gekoppelte und mit der Öffnung für den Wärmeträger kommunizierende Wärmetauscherrohrleitung für das Austauschen von Wärme zwischen dem fluiden Wärmeträger und dem Wärmespeichermedium ausgebildet.

In der wenigstens einen Wärmetauscherrohrleitung kann ein flüssiges und/oder gasförmiges Fluid bewegt werden, um in dem Wärmespeicherbehälter Wärme zu speichern und/oder um dem Wärmespeicherbehälter Wärme zu entziehen.

In der erfindungsgemäßen Vorrichtung führt die wenigstens eine Wärmetauscherrohrleitung den fluiden Wärmeträger, der von dem Wärmenutzer kommend durch die Öffnung in den Wärmespeicherbehälter einströmt, von oben nach unten. Fluider Wärmeträger, der aus dem Wärmespeicherbehälter zu dem Wärmenutzer bewegt wird, leitet die wenigstens eine Wärmetauscherrohrleitung von unten nach oben durch das Wärmespeichermedium. Dies hat zur Folge, dass sich in dem Wärmespeichermedium des Wärmespeicherbehälters eine Temperaturschichtung ausbildet. Das Einspeichern von Wärme in die Vorrichtung bewirkt, dass die Temperatur in dem Wärmespeichermedium des Wärmespeicherbehälters von unten nach oben zunimmt.

Als Wärmespeichermedium in dem Wärmespeicherbehälter eignet sich Flüssigkeit, insbesondere Flüssigkeit in Form von Wasser oder Öl. Das Wärmespeichermedium in dem Wärmespeicherbehälter speichert fühlbare Wärme.

Damit die Temperaturschichtung in dem Wärmespeichermedium nicht ausgeglichen wird, gibt es in diesem vorzugsweise eine oder mehrere Konvektionssperren. Mit solchen Konvektionssperren wird das Ausbilden eines durch Temperaturunterschiede von übereinanderliegenden Zonen in dem Wärmespeichermedium ausgelösten großräumigen Konvektionsstromes abschwächt bzw. unterbunden. Eine Konvektionssperre kann insbesondere als Gitter ausgebildet sein, das vorzugsweise quer zu der wenigstens einen Wärmetauscherrohrleitung angeordnet ist.

Der Erfindung liegt die Erkenntnis zugrunde, dass fluider Wärmeträger in Form von Wasserdampf, der in den Wärmespeicherbehälter einströmt, abhängig von seiner Temperatur in einem Wärmetauscherrohr an unterschiedlichen Stellen kondensiert. Eine Idee der Erfindung ist insbesondere, dass dort, wo der Wasserdampf kondensiert, das Entstehen von Entropie beim Wärmeübergang vom kondensierendem Wasserdampf in ein Wärmespeichermedium in einem Wärmespeicherbehälter minimiert wird. Diese Kondensationswärme kann dann nämlich innerhalb des Wärmespeicherbehälters von dem Wärmespeichermedium als fühlbare Wärme gespeichert werden.

Die vorliegende Erfindung ermöglicht insbesondere, die Temperatur und den Dampfdruck des fluiden Wärmeträgers bei Beladung des Wärmespeichers herabzusetzen und die Temperatur und den Dampfdruck des fluiden Wärmeträgers beim Entladen des Wärmespeichers anzuheben. In die erfindungsgemäße Vorrichtung kann damit Wärme bei einer ersten, niedrigen Temperatur eingespeichert werden, die der Vorrichtung dann bei einer zweiten Temperatur entnommen wird, welche die erste Temperatur übersteigt. Bei einem Ruths-Speicher ist das genau umgekehrt. Hier wird die Temperatur und der Dampfdruck bei Beladen des Speichers erhöht und bei Entladen des Speichers erniedrigt.

In dem Wärmespeicherbehälter einer erfindungsgemäßen Vorrichtung ist bevorzugt ein mit dem Wärmespeichermedium thermisch gekoppelter Wärmespeicher angeordnet, der für das Speichern von Wärme als Latentwärmespeicher ein Phasenänderungsmaterial mit einer charakteristischen Phasenänderungstemperatur enthält. Insbesondere kann in dem Wärmespeicherbehälter wenigstens ein weiterer mit dem Wärmespeichermedium thermisch gekoppelter Wärmespeicher angeordnet sein, der für das Speichern von Wärme als Latentwärmespeicher ein Phasenänderungsmaterial mit einer charakteristischen Phasenänderungstemperatur aufweist. Von Vorteil ist es wenn in dem Wärmespeicherbehälter mehrere mit dem Wärmespeichermedium thermisch gekoppelte Wärmespeicher angeordnet sind, die für das Speichern von Wärme als Latentwärmespeicher Phasenänderungsmaterial mit einer unterschiedlichen Phasenänderungstemperatur umfassen.

Bevorzugt sind in dem Wärmespeicherbehälter mehrere mit dem Wärmespeichermedium thermisch gekoppelte Wärmespeicher in von der wenigstens einen Wärmetauscherrohrleitung durchsetzten Schichtzonen angeordnet. In den Schichtzonen wird Wärme von dem Wärmeträger auf die Wärmespeicher oder umgekehrt übertragen. Die Phasenänderungstemperatur von latente Wärme speicherndem Phasenänderungsmaterial in den Wärmespeichern ist dabei auf den Verlauf der wenigstens einen Wärmetauscherrohrleitung abgestimmt. Die Phasenänderungstemperatur ist so gewählt, dass sie entlang der wenigstens einen Wärmetauscherrohrleitung in der zu der Öffnung für den Durchtritt des fluiden Wärmeträgers weisenden Richtung von einer Schichtzone zur nächsten Schichtzone zunimmt oder wenigstens gleich ist.

Damit die wenigstens eine Wärmetauscherrohrleitung oder ihre Anbindung an den Verteilungs- bzw. Sammelraum nicht durch die beim Betrieb der Vorrichtung zum Speichern von Wärme auftretenden thermischen Spannungen beschädigt, bzw. zerstört wird, ist es von Vorteil, wenn diese Leitung wenigstens abschnittsweise gebogen, insbesondere gewendelt ist.

In einem erfindungsgemäßen Wärmespeicherbehälter kann sich die eine Wärmetauscherrohrleitung von einem Verteilungsraum für den fluiden Wärmeträger zu einem Sammelraum erstrecken. Für eine hohe Wärmeübertragungsrate ist es günstig, wenn der Wärmespeicherbehälter eine Vielzahl mit dem Wärmespeichermedium thermisch gekoppelte Wärmetauscherrohrleitungen enthält, die den Verteilungsraum mit dem Sammelraum verbinden.

Der Wärmeübertrag zwischen fluidem Wärmeträger und Wärmespeichermedium lässt sich optimieren, indem der fluide Wärmeträger durch einen als Diffusor wirkenden Strömungsverteiler in den Verteilungsraum geleitet wird. Dies bewirkt, dass sich der zu den Wärmetauscherrohren strömenden fluide Wärmeträger gleichmäßig auf die Wärmetauscherrohre verteilt. Eine Verteilung von dem dem Wärmespeicherbehälter zugeführten fluiden Wärmeträger kann auch mit einem Prallblech erzielt werden, das in dem Verteilungsraum angeordnet ist. Für das Optimieren des Wärmeübertrags von fluidem Wärmeträger in dem Wärmebehälter auf das Wärmespeichermedium ist es insbesondere von Vorteil, wenn vor wenigstens einer der Wärmetauscherrohrleitungen eine Strömungsblende angeordnet ist, die der wenigstens einen Wärmetauscherrohrleitung zugeführtem fluidem Wärmeträger in der wenigstens einen Wärmetauscherrohrleitung verwirbelt und die fluiden Wärmeträger, der die Wärmetauscherrohrleitung verlässt, zu einem Strahl zusammenführt.

Als Phasenänderungsmaterial in einem Wärmespeicher eignet sich z.B. der Stoff Lacitol mit der CAS-Nummer 585-86-4, der Stoff Lactitol-Dihydrat, der die CAS-Nummer 81025-03-8 hat, der Stoff Sorbit, dessen CAS-Nummer 50-70-4 ist, und/oder der Stoff Mannit mit der CAS-Nummer 69-65-8.

Die Schmelztemperatur von Lactitol-Dihydrat ist 75° C. Die Schmelztemperatur von Sorbit liegt zwischen 110° C und 112 °C. Die Schmelztemperatur von Lactitol ist 146° C. Mannit schmilzt zwischen 166° C und 168 °C.

Der Wärmespeicherbehälter ist über eine mit der wenigstens einen Wärmetauscherrohrleitung verbundenen Rohrleitung mit einem Kondensatbehälter verbunden. Dieser Kondensatbehälter ist unterhalb des Wärmespeicherbehälters angeordnet. Die Rohrleitung ragt zu einem Bodenabschnitt des Kondensatbehälters. An dem Bodenabschnitt des Kondensatbehälters ist eine Ablauföffnung mit Ventil für das Ablaufen von Kondensat ausgebildet. Für das Einstellen des Drucks ist in dem Kondensatbehälter ein Pressluftkompressor vorgesehen. Alternativ oder zusätzlich kann die Vorrichtung auch für das Einstellen des Drucks in dem Kondensatbehälter eine Vakuumpumpe haben. Zwischen der Vakuumpumpe und dem Kondensatbehälter ist ein gekühltes Rippenrohr zur Abscheidung von kondensierbaren Gasen angeordnet.

Die Erfindung erstreckt sich auch auf eine Wärmespeichervorrichtung, in der mehrere Vorrichtungen zum Speichern von Wärme zusammengeschaltet sind. Hierzu können diese Vorrichtungen mit einem Leitungssystem verbunden sein, in dem es eine Ventilanordnung gibt, die es ermöglicht, wahlweise nur eine erste Vorrichtung für das Speichern von Wärme oder nur eine zweite Vorrichtung für das Speichern von Wärme mit einem Wärmenutzer zu verbinden, oder die erste Vorrichtung und die zweite Vorrichtung gemeinsam an den Wärmenutzer anzuschließen.

Die Vorrichtungen zum Speichern von Wärme können auch zu einer Wärmespeichervorrichtung kombiniert werden, in der es ein Leitungssystem mit einer Ventilanordnung für das Koppeln der Kondensatbehälter gibt, die ein wahlweise gemeinsames oder voneinander getrenntes Einstellen des Drucks in den Kondensatbehältern ermöglicht. In einer solchen Wärmespeichervorrichtung können die Vorrichtungen zum Speichern von Wärme bevorzugt wahlweise zueinander synchron oder voneinander unabhängig betrieben werden.

Eine erfindungsgemäße Vorrichtung ermöglicht insbesondere das Einstellen der Temperatur in einem wenigstens teilweise mit Wasser und/oder Dampf befüllten Behälter. Mit der Erfindung kann z.B. Wasser bzw. Reaktionsmasse in geschlossenen Behältern durch Dampfentnahme bzw. Dampfzufuhr abgekühlt und wieder aufgeheizt werden.

Die erfindungsgemäße Vorrichtung kann in einer Anlage mit wenigstens einem Wärmenutzer betreiben werden, der für das Übertragen von Wärme mit einer dampfförmigen Wärmeträger führenden Leitung verbunden ist. Um etwa die Temperatur in einem wenigstens teilweise mit Wasser und/oder Dampf befüllten Behälter einzustellen, kann in der Vorrichtung Wärmeträger in Form von Wasserdampf eingesetzt werden.

Indem in der wenigstens einen mit dem Wärmespeichermedium thermisch gekoppelten Wärmetauscherrohrleitung ein Wärmeträger-Kondensatpegel eingestellt wird, um damit die Temperatur für das Kondensieren von dampfförmigem Wärmeträger und oder für das Verdampfen von Wärmeträger-Kondensat in der wenigstens einen Wärmetauscherrohrleitung zu variieren, ist es nicht nur möglich, den für das Einspeichern von mit dem Wärmeträger zugeführter Wärme günstigen Temperaturbereich einzustellen, sondern auch die Temperatur bei der Abgabe von Wärme zu steuern.

Wenn der Wärmeträger-Kondensatpegel für das Einspeisen von Wärme in die Vorrichtung abgesenkt wird, kann in der Vorrichtung die Wärme eines Wärmenutzers gespeichert werden, dessen Temperatur bei der Abgabe von Wärme an die Vorrichtung absinkt. Durch Anheben des Kondensatpegels in der Vorrichtung bei Entnehmen von Wärme aus der Vorrichtung kann diese Wärme zu einem Wärmenutzer übertragen werden, dessen Temperatur bei der Zufuhr von Wärme zunimmt.

Vorteilhafte Ausführungsbeispiele der Erfindung sind in den Zeichnungen dargestellt und werden nachfolgend beschrieben.

Es zeigen:
- Fig. 1: eine Anlage mit einer ersten Vorrichtung für das Speichern von Wärme;
- Fig. 2: die Anlage bei Zufuhr von Wärme in die Vorrichtung;
- Fig. 3: die Anlage bei Abfuhr von Wärme aus der Vorrichtung;
- Fig. 4: eine zweite Vorrichtung für das Speichern von Wärme;
- Fig. 5: einen Abschnitt einer dritten Vorrichtung für das Speichern von Wärme mit einem Prallblech;
- Fig. 6: einen Abschnitt einer vierten Vorrichtung für das Speichern von Wärme mit Strömungsblenden;
- Fig. 7: die Strömungsblende der vierten Vorrichtung in einer vergrößerten Ansicht;
- Fig. 8: einen Abschnitt einer fünften Vorrichtung mit hydrodynamischen Ventilen;
- Fig. 9: ein hydrodynamisches Ventil bei Wärmezufuhr in die fünfte Vorrichtung;
- Fig. 10: ein hydrodynamisches Ventil bei Wärmeabfuhr aus der fünften Vorrichtung;
- Fig. 11: eine sechste Vorrichtung für das Speichern von Wärme mit einem Schichtlade-Dampfspeicher, der gewendelte Rohre für den Wärmeaustausch hat;
- Fig. 12: eine siebte Vorrichtung für das Speichern von Wärme mit mehreren Wärmespeicherbehältern;
- Fig. 13: einen modifizierten Leitungsabschnitt in der siebten Vorrichtung;
- Fig. 14: und Fig. 15 weitere Vorrichtungen für das Speichern von Wärme, die jeweils mehrere Wärmespeicherbehälter aufweisen.

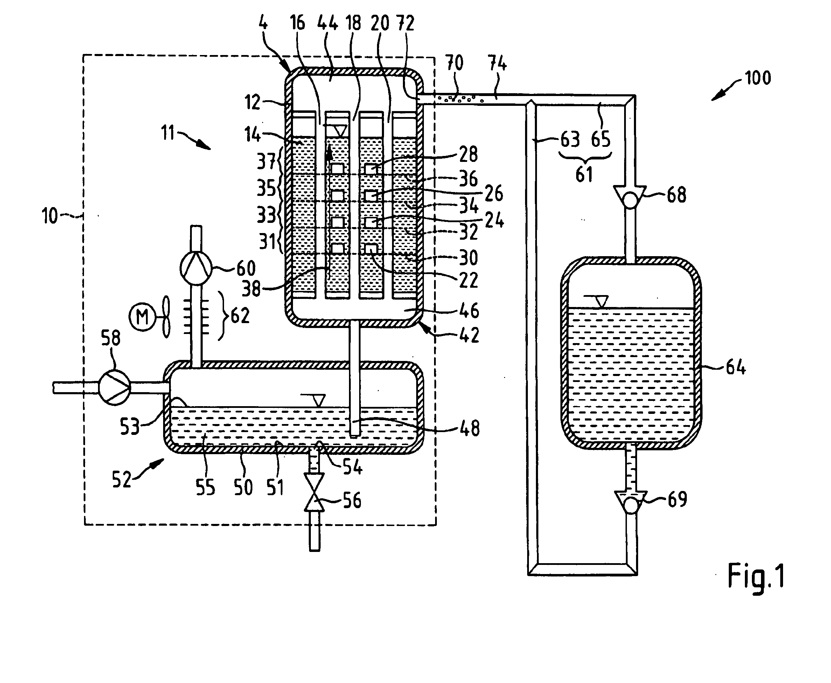

Die Fig. 1 zeigt eine Anlage 100 mit einer Vorrichtung 10 für das Speichern von Wärme. In der Vorrichtung 10 für das Speichern von Wärme gibt es einen Schichtlade-Dampfspeicher 11. Der Schichtlade-Dampfspeicher 11 hat einen Wärmespeicherbehälter 12. Der Wärmespeicherbehälter 12 beinhaltet ein Speichermedium 14, welches die Kondensationswärme als fühlbare Wärme speichert. Innerhalb des Wärmespeichermediums befinden sich Wärmespeicher 22, 24, 26 28 mit sogenannten PCMs (Phase Change Materials, d.h Phasenänderungsmaterial), die eine unterschiedliche Phasenänderungstemperatur haben. Der Wärmespeicher 22 enthält Phasenänderungsmaterial in Form von Zuckeralkohol-Lactitol-Dihydrat. In dem Wärmespeicher 24 gibt es das Phasenänderungsmaterial Sorbit. In dem Wärmespeicher 26 befindet sich das Phasenänderungsmaterial Lactitol 26. In dem Wärmespeicher 28 ist das Phasenänderungsmaterial in Form von Mannit angeordnet. Die PCMs der Wärmespeicher 22, 24, 26, 28 stehen in thermischen Kontakt mit dem Wärmespeichermedium. Sie erhöhen die Wärmekapazität des Schichtlade-Dampfspeichers 11. Die Wärmespeicher 22, 24, 26, 28 sind in übereinander liegenden Ebenen 30, 32, 34, 36 angeordnet. Sie befinden sich in unterschiedlichen Schichtzonen 31, 33 in dem Wärmespeicherbehälter 12, so dass die Phasenänderungstemperatur der PCMs in den Wärmespeichern 22, 24, 26, 28 des Wärmebehälters 12 von unten nach oben in der Richtung des Pfeils 38 zunimmt.

Innerhalb des Wärmespeicherbehälters gibt es Wärmetauscherrohre 16, 18, 20, die innerhalb des Wärmespeicherbehälters 12 ein stetiges Gefälle aufweisen. Die Wärmetauscherrohre 16, 18, 20 erstrecken sich in dem Wärmespeicherbehälter 12 von einem Verteilungsraum 44 in einen Sammelraum 46. Sie treten am unteren Ende des Wärmespeicherbehälters 12 aus und münden in einen Kondensatspeicherbehälter 50. Der Kondensatspeicherbehälter 50 befindet sich unterhalb des Wärmespeicherbehälters 12. Das in den Wärmetauscherrohren 16, 18, 20 entstehende Wärmeträger-Kondensat 55 fließt über ein Kondensatablaufrohr 48 in den Kondensatspeicherbehälter 50 ab. Das Kondensatablaufrohr 48 ragt in den Kondensatspeicherbehälter 50. Es reicht dort bis knapp über dem Boden 51 des Kondensatspeicherbehälters 50 unterhalb der Oberfläche 53 von Kondensat 55.

An der Oberseite des Kondensatspeicherbehälters 50, oberhalb der Kondensatoberfläche 53 sind zur Einstellung des Drucks ein Kompressor 58 zur Förderung von Pressluft und eine Vakuumpumpe 60 angeschlossen. Das Verbindungsrohr zwischen Vakuumpumpe 60 und dem Kondensatspeicherbehälter 50 ist als gekühltes Rippenrohr 62 ausgeführt. An der Unterseite des Kondensat-Speicherbehälters 50 befindet sich ein Kondensat-Ablassventil 56, um überschüssiges Kondensat aus dem Kondensatspeicherbehälter 50 abzulassen.

Bei höheren Speichertemperaturen führt die Verwendung von Wasser als Wärmespeichermedium 14 zu hohen Dampfdrücken, was wiederum zu einer schweren Bauweise des Speicherbehälters führt. In diesem Fall kann z. B. Thermoöl als Wärmespeichermedium 14 verwendet werden.

Die Vorrichtung 10 ist über ein Leitungssystem 61 mit einem Wärmenutzer verbunden. Der Wärmenutzer ist vorliegend ein mit Wasser 71 befüllter Wasserbehälter 64. Dieser kann in unterschiedlichen Betriebszuständen Wärme aufnehmen oder Wärme abgeben. Das Wasser des Wasserbehälters 64 kann z.B. für das Pasteurisieren und Garen in der Lebensmittelindustrie eingesetzt werden. Ebenso kann es sich bei dem Wasserbehälter 64 um ein Reaktionsgefäss zur Umsetzung hydrothermaler Verfahren und Reaktionsprozess wie beispielsweise der hydrothermalen Carbonisierung handeln. Das Leitungssystem hat Dampfleitungen 63, 65. In den Dampfleitungen 63, 65 gibt es Rückschlagventile 68, 69. Über das Leitungssystem 61 kann dem Wärmespeicherbehälter 12 fluider Wärmeträger in Form von Wasserdampf 70 durch eine Öffnung 72 über eine Leitung 74 zugeführt werden.

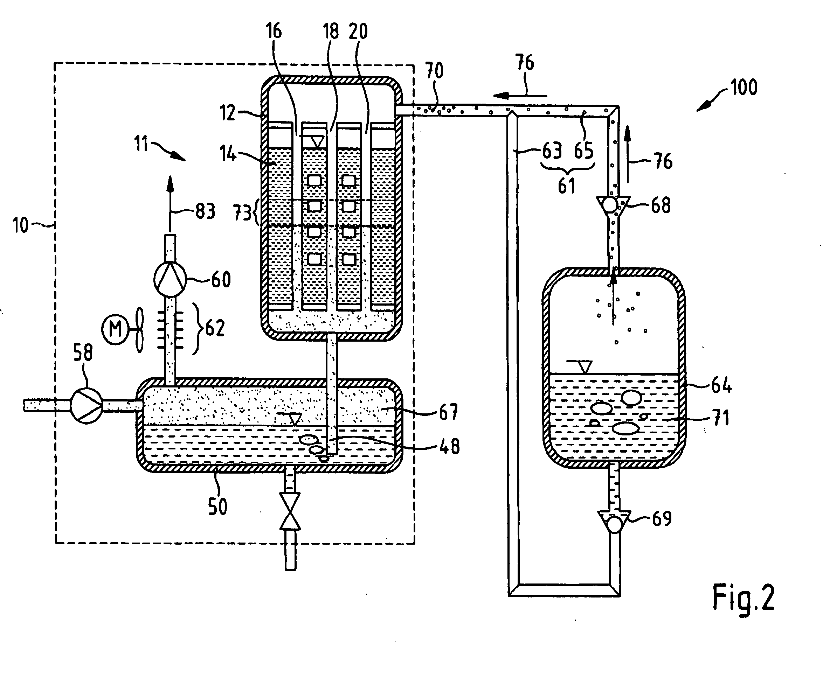

Das Einspeichern von Wärme in die Vorrichtung 10, d.h. das Beladen der Vorrichtung mit Wärme wird anhand der Fig. 2 erläutert. Um in dem Schichtlade-Dampfspeicher 11 Wärme zu speichern, wird zunächst mit der Vakuumpumpe 60 Luft aus dem Kondensatspeicherbehälter 50 abgesaugt. Dadurch fällt der Druck des nicht kondensierbaren Gases 67 im Kondensatspeicherbehälter 50 sowie der Druck des Gases im Wasserbehälter 64. Fällt der Druck im Wasserbehälter 64 unterhalb des Dampfdrucks des Wassers 71 im Wasserbehälter 64, so beginnt das Wasser im Wasserbehälter 64 zu sieden. Durch das Sieden des Wassers geht Verdampfungswärme auf Wasserdampf 70 über. Der Wasserdampf 70 strömt durch das Rückschlagventil 69 und über die Dampfleitung 65 in der Richtung der Pfeile 76 in den Verteilungsraum 44 des Schichtlade-Dampfspeichers. Der Wasserdampf 70 strömt in die Wärmetauscherrohre 16, 18, 20. Er kondensiert, in einem Kondensationsabschnitt 73 in den Wärmetauscherrohren 16, 18, 20 genau dort, wo die Temperatur der Wärmetauscherrohre 16, 18, 20 niedriger ist als die Kondensationstemperatur des Wasserdampfes. Die freiwerdende Kondensationswärme erwärmt die Wärmetauscherrohre 16, 18, 20 im Kondensationsabschnitt 73. Die Kondensationswärme geht, bedingt durch die steigende Temperatur des Wärmetauscherrohrs 16, 18, 20 im Kondensationsabschnitt 73, auf das Wärmespeichermedium 14 über, solange die Temperatur des Wärmespeichermediums 14 niedriger ist als die Kondensationstemperatur des Wasserdampfes. Das Wärmespeichermedium 14 überträgt durch Konvektion einen Teil seiner Wärme auf die Wärmespeicher 24. Das Phasenänderungsmaterial in dem Wärmespeicher 24 nimmt die übertragene Wärme in Form von Phasenänderungsenthalpie auf, sobald es eine Phasenänderungstemperatur überschreitet. Es entsteht auf diese Weise eine Temperaturschichtung des Wärmespeichermediums 14 in dem Wärmespeicherbehälter 12. Das Wärmespeichermedium mit der höchsten Temperatur sammelt sich dabei an dem oberen Ende des Schichtlade-Dampfspeichers 11.

Es sei bemerkt, dass die erfindungsgemäße Temperaturschichtung des Wärmespeichermediums 14 in dem Wärmespeicherbehälter 12 nicht zwingend das Anordnen der vorstehend beschriebenen Wärmespeicher 22, 24, 26, 28 mit Phasenänderungsmaterial in dem Wärmespeicherbehälter 12 voraussetzt. Eine entsprechende Temperaturschichtung lässt sich auch ohne solche Wärmespeicher erreichen. Allerdings erhöhen solche Wärmespeicher die Wärmekapazität der Anordnung. Sie können eine besonders ausgeprägte Temperaturschichtung in einem entsprechenden Wärmespeicherbehälter bewirken, d.h. der Temperaturgradient der Schichtung wird bei gleicher Beladung des Speichers steiler.

Ist die Temperatur des Wärmespeichermediums 14 um den Kondensationsabschnitt gleich der Kondensationstemperatur des Wasserdampfes 70 im Kondensationsabschnitt 73, so kann der Wasserdampf 70 dort nicht mehr kondensieren. Die Temperatur des Wassers 71 im Wasserbehälter 64 sinkt dann aufgrund der Wärmeabfuhr über den Wasserdampf 70. Die Folge ist, dass in dem Wasserbehälter 64 auch der Dampfdruck abnimmt und damit auch der Druck der Anlage 100.

Durch den sinkenden Druck dehnt sich dann das nicht kondensierbare Gas 67 in dem Kondensatspeicherbehälter 50 entsprechend dem allgemeinen Gasgesetz aus. Dabei verdrängt es den Wasserdampf 70 aus dem Kondensationsabschnitt 73. Das sich ausdehnende Gas 67 verhindert, dass sich der Kondensationsabschnitt 73 zu schnell nach unten in den kalten Teil des Wärmespeicherbehälters 12 verschiebt, bevor in dem oberen Teil des Wärmespeicherbehälters 12 die maximale Temperatur erreicht wird. Die Ausdehnung des Gases wirkt damit selbststabilisierend auf den Prozess des Einspeicherns von Wärme in den Schichtlade-Dampfspeicher 11. Dieser Umstand vereinfacht eine Steuerung bzw. Regelung der Anlage 100.

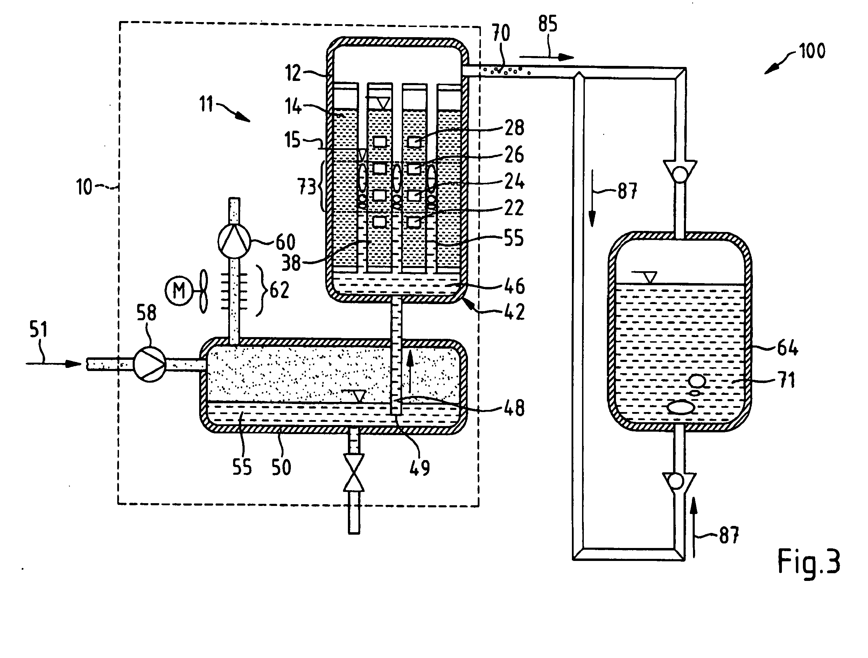

Um die Abkühlung des Wasserbehälters 64 dann fortsetzen zu können, muss über die Vakuumpumpe 60 das Gas abgesaugt werden, damit das Gas in den Wärmetauscherrohren 16, 18, 20 einen weiteren Abschnitt der Wärmetauscherrohre 16, 18, 20 für den Wasserdampf 70 freigibt. Wie die Fig. 3 zeigt, wird der Kondensationsabschnitt 75 dann in einen kälteren Abschnitt des Schichtlade-Dampfspeichers 11 verschoben. Das gekühlte Rippenrohr 62 begrenzt dabei den Wasserdampfgehalt des in der Richtung der Pfeils 83 abgesaugten Gases aus dem Kondensatspeicherbehälter 50.

Das Entladen des Schichtlade-Dampfspeichers 11, d.h. das Abführen von Wärme aus diesem, wird nachfolgend anhand der Fig. 3 erläutert. Um den Schichtlade-Dampfspeicher 11 zu entladen, wird mit Hilfe des Kompressors 58 dem Kondensatspeicherbehälter 50 entsprechend dem Pfeil 51 Luft zugeführt. Die Folge ist, dass der Druck des Gases im Kondensatspeicherbehälter 50 dann steigt.

Das Ende 49 des Kondensatablaufrohrs 48 befindet sich auch hier unterhalb der Oberfläche des Kondensates 55. Liegt der Gasdruck im Kondensatspeicherbehälter 50 über dem Dampfdruck im Wasserbehälter 64, so steigt das Kondensat 55 über das Kondensatablaufrohr 48 in die Wärmetauscherohre 16, 18, 20. Wenn dabei die Temperatur des Wärmetauscherrohrabschnitts, das vom flüssigen Kondensat benetzt wird, über der Temperatur des Wassers 71 im Wasserbehälter 64 ansteigt, so beginnt Wasser in den Wärmetauscherrohren 16, 18, 20 in dem Siedeabschnitt 73 zu sieden. Durch das Sieden des Kondensats 55 in den Wärmetauscherrohren 16, 18, 20 werden die Wärmetauscherrohre 16, 18, 20 unter die Temperatur des Wärmespeichermediums 14 abgekühlt. Aufgrund der Temperaturdifferenz zwischen Wärmespeichermedium 14 und Wärmetauscherrohren 16, 18, 20 wird dann Wärme aus dem Wärmespeichermedium 14 auf die Wärmetauscherrohre 16, 18, 20 übertragen. Die übertragene Wärme verdampft dort Kondensat. Sinkt die Temperatur des Wärmespeichermediums 14 unter die Phasenänderungstemperatur eines PCMs, 22, 24, 26, 28 in einem Wärmespeicher, so ändert das PCM dort seine Phase. Dabei gibt es die Phasenänderungsenthalpie an das Wärmespeichermedium 14 ab.

Der in den Wärmetauscherrohren 16, 18, 20 entstehende Wasserdampf 70 strömt dann über die Wärmetauscherrohre 16, 18, 20 in der Richtung der Pfeile 85, 87 durch die Dampfleitung 63 und das Rückschlagventil 68 zurück in den Wasserbehälter 64. Dort kondensiert der Wasserdampf 70. Aufgrund der bei der Kondensation freigesetzten Kondensationswärme steigt dabei die Temperatur des Wassers 71 in dem Wasserbehälter 64. Wegen der steigenden Temperatur des Wassers 71 im Wasserbehälter 64 wird dabei der Dampfdruck des Wassers 71 und in Folge dessen auch der Gesamtdruck in der Anlage 100 erhöht. Das Gas 67 in dem Kondensatspeicherbehälter 50 wird dann komprimiert und die Kondensatsäule aus dem Siedeabschnitt 73 zurückgedrängt. In dem Wärmespeicherbehälter 12 entsteht in diesem Fall weniger Wasserdampf, so dass sich der Druckanstieg in der Anlage 100 verlangsamt. Dies stabilisiert den Druck in der Anlage 100 bei Freisetzen von Wärme aus dem Schichtlade-Dampfspeicher 11. Das vereinfacht das Steuern bzw. Regeln des Entladevorgangs des Schichtlade-Dampfspeichers 11.

Durch Einstellen des Kondensatpegels 15 in den mit dem Wärmespeichermedium 14 thermisch gekoppelten Wärmetauscherrohrleitungen 16, 18, 20 kann in dem Schichtlade-Dampfspeicher 11 insbesondere die Temperatur für das Kondensieren von dampfförmigem Wärmeträger 70 bzw. für das Verdampfen von Wärmeträger-Kondensat 55 gesteuert werden. Indem z.B. der Wärmeträger-Kondensatpegel 15 bei Einspeisen von Wärme in die Vorrichtung 10 abgesenkt wird, kann in der Vorrichtung 10 die Wärme eines Wärmenutzers gespeichert werden, dessen Temperatur bei der Übertragung von Wärme absinkt. Wenn der Kondensatpegel 15 in der Vorrichtung 10 bei Entnehmen von Wärme aus der Vorrichtung 10 angehoben wird, kann diese Wärme zu einem Wärmenutzer übertragen werden, dessen Temperatur dabei ansteigt.

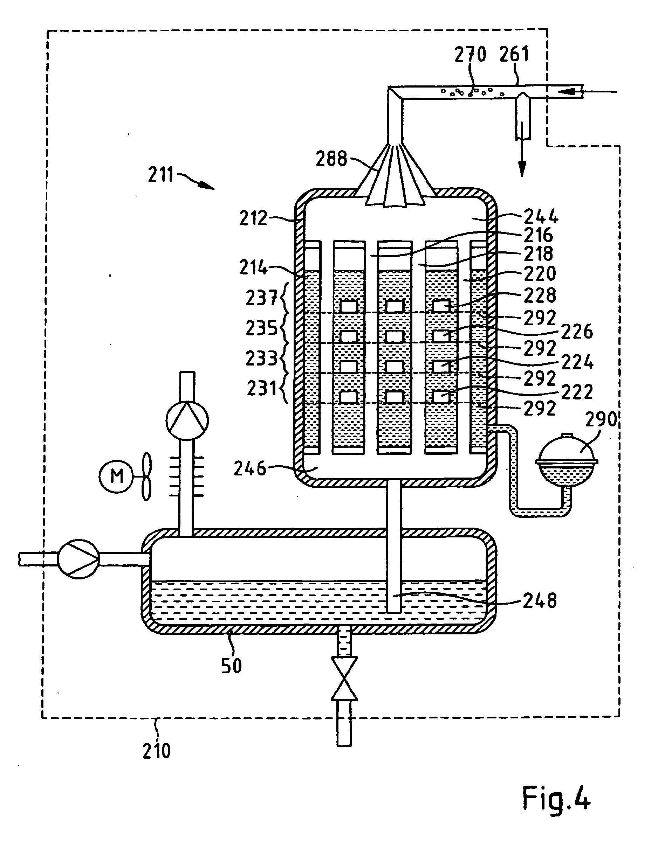

Die in der Fig. 4 gezeigte Vorrichtung 210 zum Speichern von Wärme enthält einen Schichtlade-Dampfspeicher 211. Der Aufbau der Vorrichtung 210 entspricht dem anhand der Fig. 1 bis Fig. 3 beschriebenen Aufbau der Vorrichtung 10. Funktional gleichwirkende Baugruppen sind deshalb in Fig. 4 in Bezug auf Fig. 1 mit um die Zahl 200 erhöhten Bezugszahlen kenntlich gemacht. Der Wärmespeicherbehälter 212 enthält einen Strömungsverteiler 288. Der Strömungsverteiler 288 hat fächerförmig angeordnete koaxiale Kegel bzw. Trichter, durch die der fluide Wärmeträger in Form von Wasserdampf in den Wärmespeicherbehälter 212 gelangt. Der Strömungsverteiler 288 verteilt den Wasserdampf 270 aus dem Leitungssystem 261 gleichmäßig auf die Wärmetauscherrohre 216, 218, 220. Dies wird erreicht, indem der Strömungsverteiler 288 die in dem Leitungssystem 261 vor diesem anstehende Strömung verlangsamt und somit ihr dynamischer Druck reduziert wird. Wenn dieser dynamische Druck kleiner ist als der Druckabfall über die Rohre, dann ist die Strömung gezwungen, sich auf alle Rohre zu verteilen.

Der Wärmespeicherbehälter 212 ist mit einem Ausgleichsbehälter 290 für das Wärmespeichermedium 214 verbunden. Der Ausgleichsbehälter 290 ermöglicht das Ausweichen von Wärmespeichermedium 214 aus dem Wärmespeicherbehälter 212 in den Ausgleichsbehälter 290, wenn sich das Wärmespeichermedium 214 aufgrund einer Zufuhr von Wärme in den Wärmespeicherbehälter 212 ausdehnt. Dieser Ausgleichsbehälter 290 gewährleistet, dass das Wärmespeichermedium 214 über einen großen Temperaturbereich betrieben werden kann.

Zwischen den Schichtzonen 231, 233, 235, 237 sind Wärmespeicherbehälter 212 Konvektionssperren in Form von feinmaschigen Gittern 292 angeordnet. Mit den Konvektionssperren werden in dem Wärmespeicherbehälter 212 Konvektionsströme zwischen den Schichtzonen 231, 233, 235, 237 minimiert. Auf diese Weise lässt sich erreichen, dass der Schichtlade-Dampfspeicher 211 in dem Wärmespeicherbehälter 212 einen Temperaturgradient beibehält, der von dem Bodenabschnitt 246 zu den Deckenabschnitt 244 weist.

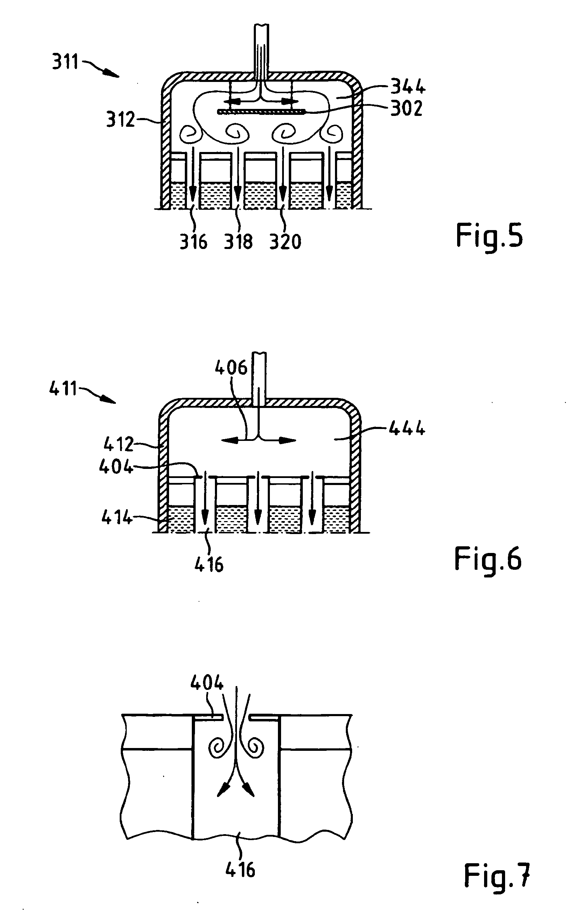

Die Fig. 5 zeigt einen Abschnitt eines Schichtlade-Dampfspeichers 311 in einer Vorrichtung zum Speichern von Wärme, der einen Wärmespeicherbehälter 312 hat, in dessen Verteilungsraum 344 ein Prallblech 302 angeordnet ist. Das Prallblech 302 bewirkt, dass der über die Öffnung 372 in den Wärmespeicherbehälter 312 einströmende Wasserdampf 370 verwirbelt und hierdurch gleichmäßig auf die Wärmetauscherrohre 316, 318, 320 verteilt wird.

Die Fig. 6 zeigt einen Abschnitt eines Schichtlade-Dampfspeichers 411 in einer Vorrichtung zum Speichern von Wärme, bei dem die Wärmetauscherrohre 416, 418, 420 in dem Wärmespeicherbehälter 412 mit Strömungsblenden 404 versehen sind. Wie die Fig. 7 verdeutlicht, bewirken die Strömungsblenden 404 eine Verwirbelung des mit der Strömungsrichtung 406 in den Verteilungsraum 444 einströmenden Wasserdampfs 470 in den Wärmetauscherrohren 416, 418, 420. Damit lässt sich ebenfalls ein guter Wärmeübertrag von fluidem Wärmeträger in Form von Wasserdampf in das in dem Wärmespeicherbehälter 412 angeordnete Wärmespeichermedium 414 erzielen. Auch hier trägt die mittels der Blenden 404 hervorgerufene Verwirbelung zur Verlangsamung der Strömung und damit zu einer für den Wärmeübertrag in den Wärmetauscherrohren 416, 418, 420 wünschenswerten Strömungsverteilung zusätzlich bei.

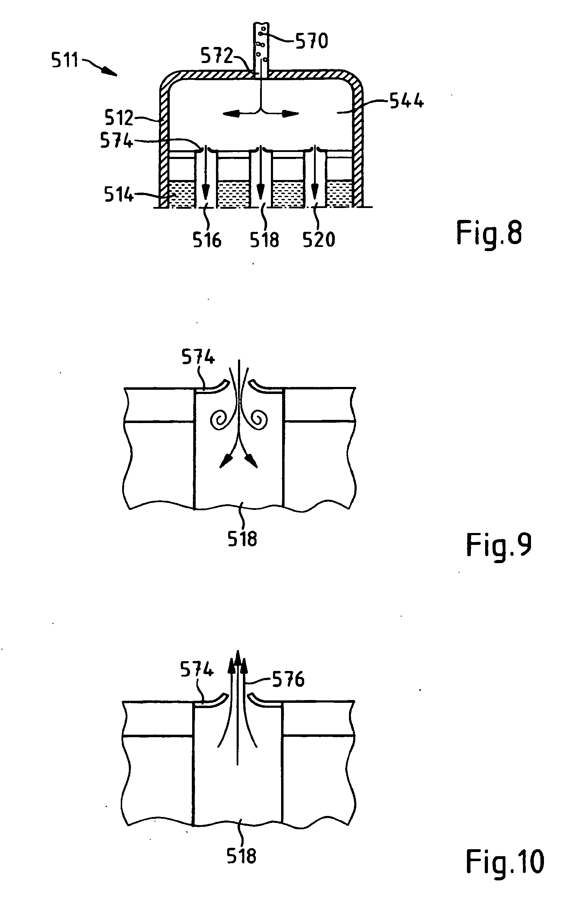

Die Fig. 8 zeigt einen Abschnitt eines Schichtlade-Dampfspeichers 511 in einer Vorrichtung zum Speichern von Wärme, bei dem die Wärmetauscherrohre 516, 518, 520 in dem zu der Öffnung 572 weisenden Abschnitt eine Düse 574 haben, die sich zu der Öffnung 572 hin verjüngt. Wie die Fig. 9 und Fig. 10 zeigen, wirkt die Düse 574 an den Wärmetauscherrohren 516, 518, 520 als hydrodynamisches Ventil bzw. hydrodynamische Drossel. Bei Einströmen von Wasserdampf in die Wärmetauscherrohre 516, 518, 520 gibt es einen Druckabfall über die Düse 574. Der Wasserdampf wird dann verwirbelt und in den Wärmerohren 516, 518, 520 verteilt, was einem schnellen Wärmeübertrag von fluidem Wärmeträger in Form von Wasserdampf in das Wärmespeichermedium 514 förderlich ist. Das Rückströmen von Wasserdampf aus den Wärmetauscherrohren 516, 518, 520 erfolgt dagegen ohne Verwirbelungen, so dass der Wasserdampf 570 den Wärmespeicherbehälter 512 aufgrund der vorstehend beschriebenen Strömungsverteilung dann ohne nennenswerte Strömungsverluste verlassen kann.

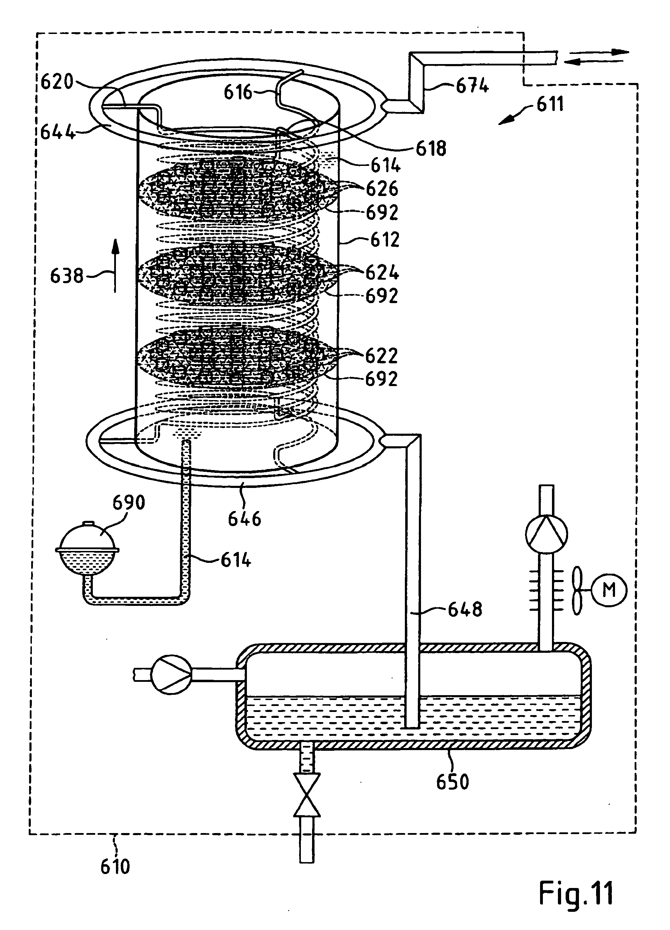

Die in Fig. 11 gezeigte Vorrichtung 610 für das Speichern von Wärme enthält einen Schichtlade-Dampfspeicher 611. Der Aufbau der Vorrichtung 610 entspricht dem Aufbau der anhand der Fig. 4 beschriebenen Vorrichtung 210. Funktional gleichwirkende Baugruppen sind in Fig. 11 in Bezug auf Fig. 4 mit um die Zahl 400 erhöhten Bezugszahlen kenntlich gemacht. Der Schichtlade-Dampfspeicher 611 hat einen Wärmespeicherbehälter 612, in dem die Wärmetauscherrohre 616, 618, 620 von dem Bodenabschnitt 646 zu dem Deckenabschnitt 644 des Behälters 612 helixförmig gewendelt sind. Der Wärmespeicherbehälter 612 ist mit Wärmespeichermedium 614 in Form von Wasser oder Thermoöl befüllt. Für den Ausgleich der Volumenänderung des Wärmespeichermediums 614 beim Einspeichern von Wärme hat die Vorrichtung 610 einen Ausgleichsbehälter 690.

Die Wärmespeicher 622, 624, 628 sind in übereinanderliegenden Schichtzonen 631, 633, 635 angeordnet. Sie befinden sich auf einem Gitter 692, das als Konvektionssperre wirkt. Die Phasenänderungstemperatur der Wärmespeicher 622, 624, 626 nimmt dabei von unten nach oben in der Richtung des Pfeils 638 zu. Die gewendelte, gebogene Form der Wärmetauscherrohre 616, 618, 620 bewirkt, dass sich diese in dem Wärmespeicherbehälter 612 bei Beaufschlagen mit heißem Wärmeträger in Form von Dampf ausdehnen können, ohne dabei mechanisch Schaden zu nehmen.

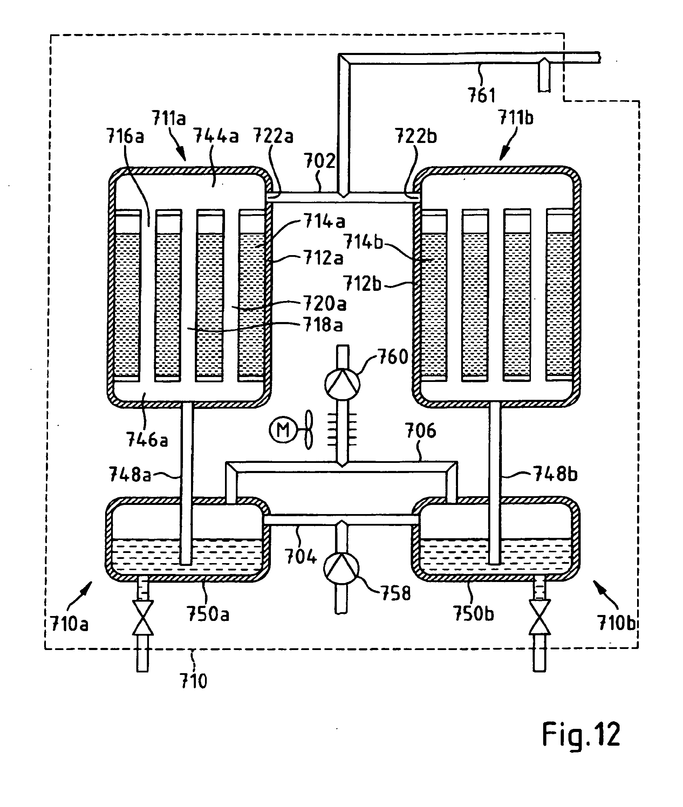

Die Fig. 12 zeigt eine Wärmespeichervorrichtung 710 mit zwei Vorrichtungen 710a, 710b für das Speichern von Wärme. Jede der Vorrichtungen 710a, 710b enthält einen Schichtlade-Dampfspeicher 711a, 711b. Die Schichtlade-Dampfspeicher 711 a, 711 b umfassen einen Wärmespeicherbehälter 712a, 712b, dessen Aufbau dem Wärmespeicherbehälter 12 in der anhand der Fig. 1 bis Fig. 3 beschriebenen Vorrichtung 10 entspricht. In der Vorrichtung 710 sind daher Baugruppen, die Baugruppen in der Vorrichtung 10 funktional entsprechen, mit um die Zahl 700 erhöhten Bezugszahlen kenntlich gemacht. Die Schichtlade-Dampfspeicher 711 a, 711 b in der Vorrichtung 710 sind parallel geschaltet. Die Schichtlade-Dampfspeicher 711a, 711 b sind zueinander identisch. Sie haben ein Kondensat-Ablaufrohr 748a, 748b, durch das einem Kondensatspeicherbehälter 750a, 750b aus dem Wärmespeicherbehälter 712a, 712b Kondensat zugeführt werden kann. Die Öffnungen 772a, 772b der Schichtlade-Dampfspeicher 711a, 711 b sind über eine Leitung 702 verbunden und an ein gemeinsames Leitungssystem 761 angeschlossen. Die Vorrichtung 710 enthält Leitungen 704, 706, die einen Druckausgleich zwischen den Kondensatspeicherbehältern 750a, 750b bewirken.

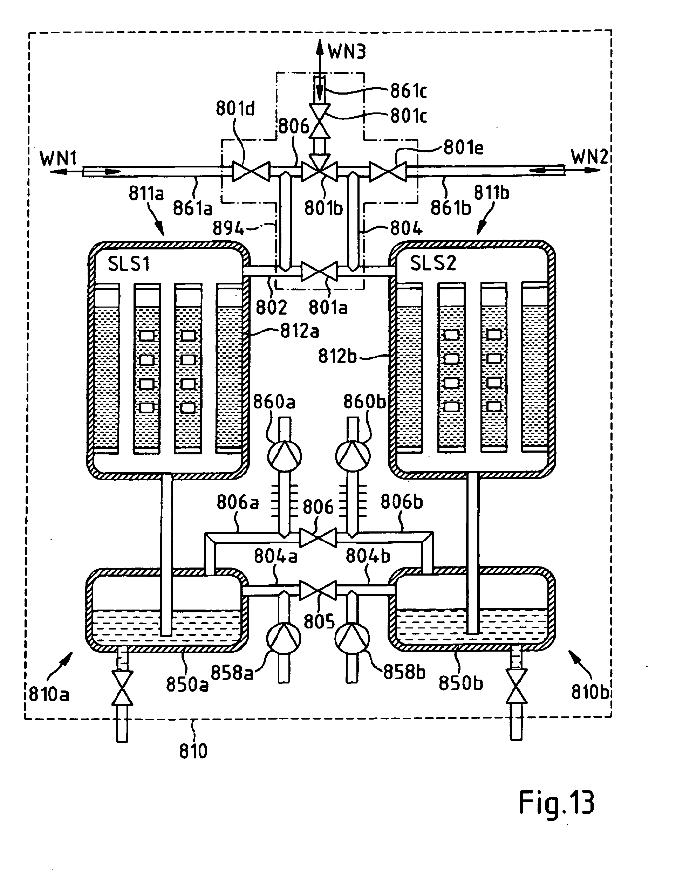

Die Fig. 13 zeigt eine Vorrichtung 810 für das Speichern von Wärme, die einen Schichtlade-Dampfspeicher 811 a und einen Schichtlade-Dampfspeicher 811b enthält. Auch die Schichtlade-Dampfspeicher 811 a, 811b umfassen einen Wärmespeicherbehälter 812a, 812b, dessen Aufbau dem Wärmespeicherbehälter 12 in der anhand der Fig. 1 bis Fig. 3 beschriebenen Vorrichtung 10 entspricht. In der Vorrichtung 810 sind daher Baugruppen, die Baugruppen in der Vorrichtung 10 funktional entsprechen, mit um die Zahl 800 erhöhten Bezugszahlen kenntlich gemacht. Die Schichtlade-Dampfspeicher 811 a, 811 b und die Kondensatspeicherbehälter 850a, 850b in der Vorrichtung 810 können mittels steuerbarer Ventile 801 a, 801 b, 801 c, 803a, 803b in den Leitungen 802, 804, 806, 804a, 804b. 806a, 806b, 861 c wahlweise miteinander verbunden oder voneinander getrennt werden. Die Ventile 801 d, 801e ermöglichen die Abtrennung der Wärmenutzer WN1, WN2 von den Schichtladespeichern SLS1, SLS2.

Die Vorrichtung 810 ermöglicht damit, Wärmenutzer WN1, WN2, WN3, die an die Leitungssysteme 861 a, 861 b, 861 c angeschlossen sind, wahlweise mit den Schichtlade-Dampfspeichern 811 a, 811b gemeinsam zu verbinden oder die Schichtlade-Dampfspeicher 811 a, 811b zu trennen und dann mit verschiedenen Wärmenutzern WN1, WN2, WN3 zu koppeln.

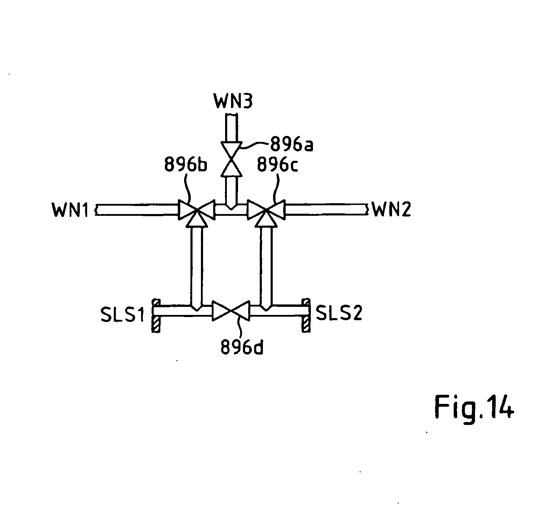

Die Fig. 14 zeigt eine zu der Ventilanordnung in dem Leitungsabschnitt 894 in der Vorrichtung 810 alternative Ventilanordnung 896 mit Ventilen 896a, 896b, 896c und 896d, die es ermöglichen, die Schichtlade-Dampfspeichern 811 a, 811 b gemeinsam zu verbinden oder die Schichtlade-Dampfspeicher 811a, 811b zu trennen und mit verschiedenen Wärmenutzern WN1, WN2, WN3 zu koppeln.

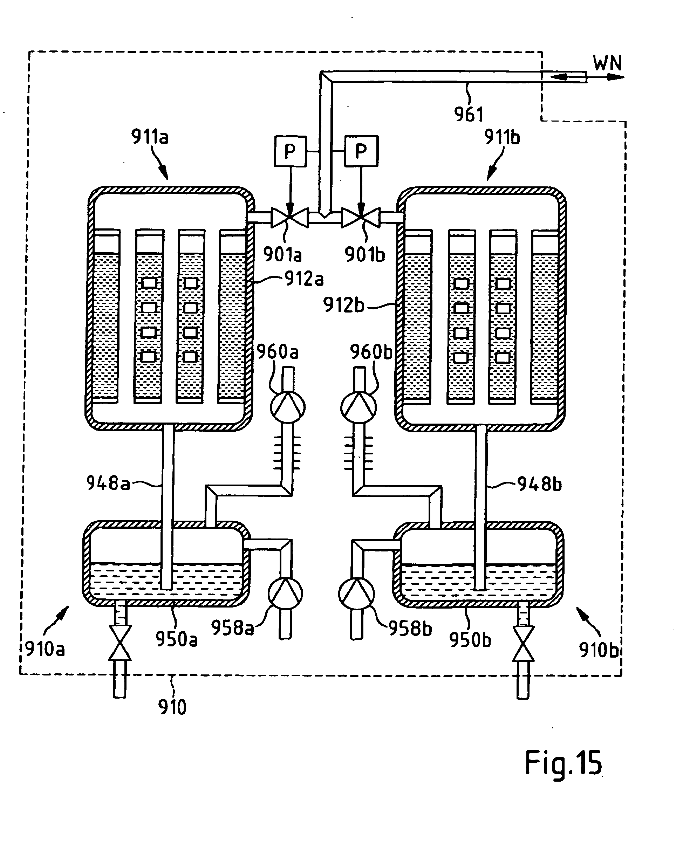

In der Fig. 15 ist eine Vorrichtung 910 für das Speichern von Wärme gezeigt, die einen Schichtlade-Dampfspeicher 911a und einen Schichtlade-Dampfspeicher 911b enthält. Auch die Schichtlade-Dampfspeicher 911 a, 911b umfassen einen Wärmespeicherbehälter 912a, 912b, dessen Aufbau dem Wärmespeicherbehälter 12 in der anhand der Fig. 1 bis Fig. 3 beschriebenen Vorrichtung 10 entspricht. In der Vorrichtung 910 sind daher Baugruppen, die zu Baugruppen in der Vorrichtung 10 funktional gleichwirkend sind, mit um die Zahl 900 erhöhten Bezugszahlen kenntlich gemacht. Die Schichtlade-Dampfspeicher 911 a, 911b und die Kondensatspeicherbehälter 950a, 950b in der Vorrichtung 910 können mittels der druckgesteuerten Ventile 901 a, 901 b in der Leitung 902 wahlweise miteinander verbunden oder voneinander getrennt werden.

Die Schichtlade-Dampfspeicher 911 a, 911 b sind bevorzugt für einen Betrieb in unterschiedlichen Temperaturbereichen usgelegt, z.B. der Schichtlade-Dampfspeicher 911 a für den Betrieb in einem Temperaturbereich zwischen 170 °C und 230 °C und der Schichtlade-Dampfspeicher 911 b für einen Betrieb im Temperaturbereich zwischen 100 °C und 180 °C.

Die Erfindung eignet sich insbesondere für die Wärmespeicherung in der Lebensmittelindustrie, die hier z. B. beim Erhitzen und Abkühlen von Lebensmittelkonserven von Interesse ist. Lebensmittelkonserven werden bei ihrer Herstellung im kalten Zustand befüllt und Verschlossen. Das Garen und Pasteurisieren erfolgt durch Erhitzen der verschlossenen Konserve auf ca. 90 °C und durch anschießendes Abkühlen. Hier können die vorstehend beschriebenen Anlagen und Vorrichtungen zum Speichern von Wärme mit einem Schichtlade-Dampfspeicher zum Einsatz kommen, um die Wärme, die zum Pasteurisieren nötig ist, wieder zu verwenden. Ebenso kann die Erfindung zur Speicherung von Wärme von hydrothermaler Verfahren wie z.B. der Reaktionswärme aus der hydrothermalen Carbonisierung eingesetzt werden. Die hydrothermale Carbonisierung ist ein nass-chemisches Verfahren, in dessen Verlauf Biomasse (organ. Abfälle, Pflanzenreste, Fäkalien, Klärschlamm u.a.) in einer Vorrichtung mit einem Reaktionsbehälter, wie sie z.B. in der WO 2010/133696 A2 beschrieben ist, auf die hiermit vollumfänglich Bezug genommen wird und deren Offenbarung in die Beschreibung dieser Erfindung mit einbezogen wird, einfach und hocheffizient zu verschiedene Arten von Kohle unter Freisetzung von Energie umgewandelt werden kann.

Die Erfindung kann insbesondere verwendet werden, um die Wärmeenergie einer chemischen Reaktion, etwa der hydrothermalen Carbonisierung, die im Batchbetrieb freigesetzt wird, zwischenzuspeichern und als Startenergie und Aufrechterhaltung des Prozesses für andere Batchreaktoren bereitzustellen. Vorteilhaft ist die hierbei mögliche Einspeisung von Wärmeenergie in den Reaktionsbehälter von niedrigen zu hohen Temperaturen hin aus Schichten des Wärmespeichers gleicher Temperatur sowie deren Rückspeisung von hohen zu niedrigen Temperaturen hin zurück in die Schichten gleicher Temperatur in dem Wärmespeicher, so dass nur geringe Entropieentwicklung aufgrund von Wärmeleitung zu erwarten ist.

Zusammenfassend ist folgendes festzuhalten: Die Erfindung betrifft eine Vorrichtung 10 zum Speichern von Wärme. Die Vorrichtung hat einen Wärmespeicherbehälter 12, der Wärmespeichermedium 14 enthält. In dem Wärmespeicherbehälter 12 gibt es eine Öffnung 72 für den Durchtritt eines fluiden Wärmeträgers 70 von und/oder zu einem Wärmenutzer 64. In dem Wärmespeicherbehälter 12 ist wenigstens eine mit dem Wärmespeichermedium 14 und mit der Öffnung 72 für den Wärmeträger 70 kommunizierende Wärmetauscherrohrleitung 16, 18, 20 ausgebildet, um dem Wärmeträger 70 Wärme zu entziehen und/oder um dort Wärme an den Wärmespeicherbehälter 12 abzugeben.

## Patentansprüche

1. Vorrichtung (10) für das Speichern von Wärme mit einem Wärmespeicherbehälter (12), der Wärmespeichermedium (14) enthält und der eine Öffnung (72) für den Durchtritt eines fluiden Wärmeträgers (70) von und/oder zu einem Wärmenutzer (64) hat, wobei in dem Wärmespeicherbehälter (12) wenigstens eine mit dem Wärmespeichermedium (14) thermisch gekoppelte und mit der Öffnung (72) für den Wärmeträger (70) kommunizierende Wärmetauscherrohrleitung (16, 18, 20) für das Austauschen von Wärme zwischen dem fluiden Wärmeträger (70) und dem Wärmespeichermedium (14) ausgebildet ist und der Wärmespeicherbehälter (12) über eine mit der wenigstens einen Wärmetauscherrohrleitung (16,18,20) kommunizierende Rohrleitung (48) mit einem Kondensatbehälter (50) verbunden ist, und wobei die wenigstens eine Wärmetauscherrohrleitung (16, 18, 20) fluiden Wärmeträger (70), der aus dem Wärmespeicherbehälter (12) zu dem Wärmenutzer (64) bewegt wird, von unten nach oben durch das Wärmespeichermedium (14) führt, und fluiden Wärmeträger (70), der von dem Wärmenutzer (64) kommend durch die Öffnung (72) in den Wärmespeicherbehälter (12) einströmt, von oben nach unten führt,
**dadurch gekennzeichnet, dass**
die mit der wenigstens einen Wärmetauscherrohrleitung (16,18,20) kommunizierende Rohrleitung (48) zu einem Bodenabschnitt (52) des Kondensatbehälters (50) ragt und für das Einstellen des Drucks in dem Kondensatbehälter (50) ein Pressluftkompressor (58) und/oder eine Vakuumpumpe (60) vorgesehen ist.

2. Vorrichtung nach Anspruch 1, **dadurch gekennzeichnet, dass** in dem Wärmespeichermedium (214) wenigstens eine Konvektionssperre (292) angeordnet ist, die das Ausbilden eines durch Temperaturunterschiede von übereinanderliegenden Zonen in dem Wärmespeichermedium (214) ausgelösten Konvektionsstromes abschwächt und / oder unterbindet.

3. Vorrichtung nach Anspruch 2, **dadurch gekennzeichnet, dass** die wenigstens eine Konvektionssperre ein in dem Wärmespeichermedium (214) zu der wenigstens einen Wärmetauscherrohrleitung (216, 218, 220) angeordnetes Gitter (292) ist.

4. Vorrichtung nach einem der Ansprüche 1 bis 3, **dadurch gekennzeichnet, dass** in dem Wärmespeicherbehälter (12) wenigstens ein mit dem Wärmespeichermedium (14) thermisch gekoppelter Wärmespeicher (22,24,26,28) angeordnet ist, der für das Speichern von Wärme als Latentwärmespeicher ein Phasenänderungsmaterial mit einer charakteristischen Phasenänderungstemperatur enthält und/oder, dass in dem Wärmespeicherbehälter (12) mehrere mit dem Wärmespeichermedium (14) thermisch gekoppelte Wärmespeicher (22,24,26,28) in von der wenigstens einen Wärmetauscherrohrleitung (16, 18, 20) durchsetzten Schichtzonen (31, 33, 35, 37) angeordnet sind, in denen Wärme von dem Wärmeträger (70) auf die Wärmespeicher (22, 24, 26, 28) oder umgekehrt übertragen werden kann, wobei die Wärmespeicher (22, 24, 26, 28) ein latente Wärme speicherndes Phasenänderungsmaterial mit einer Phasenänderungstemperatur enthalten, die entlang der wenigstens einen Wärmetauscherrohrleitung (16, 18, 20) in der zu der Öffnung (72) für den Durchtritt des fluiden Wärmeträgers (70) weisenden Richtung (38) von einer Schichtzone (31, 33) zur nächsten Schichtzone (33, 35) zunimmt oder wenigstens gleich ist.

5. Vorrichtung nach Anspruch 4, **dadurch gekennzeichnet, dass** das Phasenänderungsmaterial in einem Wärmespeicher (22,24,26,28) Lactitol-Dihydrat und/oder Sorbit und/oder Lactitol und/oder Mannit ist.

6. Vorrichtung nach einem der Ansprüche 1 bis 5, **dadurch gekennzeichnet, dass** die wenigstens eine Wärmetauscherrohrleitung (616, 618, 620) wenigstens abschnittsweise gebogen, insbesondere gewendelt ist und/oder dass der Kondensatbehälter (50) unterhalb des Wärmespeicherbehälters (12) angeordnet ist und/oder dass an dem Bodenabschnitt (52) des Kondensatbehälters (50) eine Ablauföffnung (54) mit Ventil (56) für das Ablaufen von Kondensat ausgebildet ist.

7. Vorrichtung nach einem der Ansprüche 1 bis 6, **dadurch gekennzeichnet, dass** die wenigstens eine Wärmetauscherrohrleitung (16,18,20) von einem in dem Wärmespeicherbehälter (12) ausgebildeten Verteilungsraum (44) für den fluiden Wärmeträger (70) zu einem in dem Wärmespeicherbehälter (12) ausgebildeten Sammelraum (46) für den fluiden Wärmeträger erstreckt ist.

8. Vorrichtung nach Anspruch 6, **dadurch gekennzeichnet, dass** der Wärmespeicherbehälter (12) eine Vielzahl mit dem Wärmespeichermedium (14) thermisch gekoppelte Wärmetauscherrohrleitungen (16, 18, 20) enthält, die den Verteilungsraum (44) mit dem Sammelraum (46) verbinden.

9. Vorrichtung nach Anspruch 8, **dadurch gekennzeichnet, dass** in dem Verteilungsraum (244) der fluide Wärmeträger (70) durch einen als Fächer koaxialer Hohlkegel bzw. Hohltrichter ausgeführten Diffusor (288) zugeführt wird, der zu den Wärmetauscherrohren (216, 218, 220) strömenden fluiden Wärmeträger (70) auf die Wärmetauscherrohre (216, 218, 220) verteilt.

10. Vorrichtung nach Anspruch 7, **dadurch gekennzeichnet, dass** in dem Verteilungsraum (244) ein Prallblech (302) angeordnet ist, das einen dem Wärmespeicherbehälter (12) zugeführten fluiden Wärmeträger (70) verwirbelt und auf die Wärmetauscherrohrleitungen (316, 318, 320) verteilt.

11. Vorrichtung nach einem der Ansprüche 1 bis 10, **dadurch gekennzeichnet, dass** vor wenigstens einer der Wärmetauscherrohrleitungen (416) eine Strömungsblende (404) angeordnet ist, die der wenigstens einen Wärmetauscherrohrleitung (416) zugeführten fluiden Wärmeträger (70) in der wenigstens einen Wärmetauscherrohrleitung (416) verwirbelt oder dass vor wenigstens einer der Wärmetauscherrohrleitungen (516) eine Düse (574) angeordnet ist, die in die wenigstens eine Wärmetauscherrohrleitung (516) strömenden fluiden Wärmeträger (70) in der wenigstens einen Wärmetauscherrohrleitung (516) verwirbelt und die fluiden Wärmeträger (70) der die Wärmetauscherrohrleitung (516) verlässt, zu einem Strahl (576) zusammenführt und/oder, dass der Wärmespeicherbehälter (12) als Wärmespeichermedium (14) eine Flüssigkeit, insbesondere Wasser oder Öl enthält und/oder das Wärmespeichermedium (14) in dem Wärmespeicherbehälter (12) fühlbare Wärme speichert und/oder dass der Kondensatbehälter (50) unterhalb des Wärmespeicherbehälters (12) angeordnet ist und/oder dass an dem Bodenabschnitt (52) des Kondensatbehälters (50) eine Ablauföffnung (54) mit einem Ventil (56) für das Ablaufen von Kondensat ausgebildet ist und/oder dass zwischen einer Vakuumpumpe (60) für das Einstellen des Drucks in dem Kondensatbehälter (50) und dem Kondensatbehälter (50) ein gekühltes Rippenrohr (62) zur Abscheidung von kondensierbaren Gasen angeordnet ist.

12. Wärmespeichervorrichtung (710) mit zwei oder mehr gemäß einem der Ansprüche 1 bis 11 ausgebildeten Vorrichtungen (710a, 710b, 810a, 810b, 910a, 910b) für das Speichern von Wärme.

13. Wärmespeichervorrichtung (910) gemäß Anspruch 12, **dadurch gekennzeichnet, dass** ein Leitungssystem (902a, 902b) mit einer Ventilanordnung (901 a, 901 b) vorgesehen ist, die es ermöglicht, entweder eine erste Vorrichtung (910a) für das Speichern von Wärme, eine zweite Vorrichtung (910b) für das Speichern von Wärme oder die erste Vorrichtung (910a) und die zweite Vorrichtung (910b) mit einem Wärmenutzer zu verbinden.

14. Wärmespeichervorrichtung (810) mit zwei oder mehr gemäß einem der Ansprüche 1 bis 11 ausgebildete Vorrichtungen (810a, 810b) für das Speichern von Wärme, **dadurch gekennzeichnet, dass** ein Leitungssystem (804a, 804b, 806a, 806b) mit einer Ventilanordnung (805, 806) für das Koppeln der Kondensatbehälter (850a, 850b) vorgesehen ist, die ein wahlweise gemeinsames oder voneinander getrenntes Einstellen des Drucks in den Kondensatbehältern (850a, 850b) ermöglicht.

15. Anlage mit wenigstens einem Wärmenutzer, der für das Übertragen von Wärme mit einer dampfförmigen Wärmeträger (70) führenden Leitung (63, 65) mit einer gemäß einem der Ansprüche 1 bis 11 ausgebildeten Vorrichtung verbunden ist.

16. Anlage (100) mit einer Vorrichtung nach einem der Ansprüche 1 bis 11 mit einer Wärmeträger in Form von Wasserdampf (70) führenden Leitung (63, 65) für das Einstellen der Temperatur in einem wenigstens teilweise mit Wasser und/oder Dampf befüllten, vorzugsweise als Reaktionsbehälter ausgebildeten Behälter (64).

17. Verfahren zum Betrieb einer wenigstens einen Wärmenutzer (64) aufweisenden Anlage, der für das Abgeben oder Zuführen von Wärme mit einer einen dampfförmigen Wärmeträger (70) führenden Leitung (63, 65) mit einer Vorrichtung (10) für das Speichern von Wärme verbunden ist, die einen Wärmespeicherbehälter (12) umfasst, der Wärmespeichermedium (14) enthält und der eine Öffnung (72) für den Durchtritt eines fluiden Wärmeträgers (70) von und/oder zu einem Wärmenutzer (64) hat, bei dem in der wenigstens einen mit dem Wärmespeichermedium (14) thermisch gekoppelten und mit der Öffnung (72) für den Wärmeträger (70) kommunizierenden Wärmetauscherrohrleitung (16, 18, 20) ein Wärmeträger-Kondensatpegel (15) eingestellt wird, um damit die Temperatur für das Kondensieren von dampfförmigem Wärmeträger (70) und/oder für das Verdampfen von Wärmeträger-Kondensat (55) in der wenigstens einen Wärmetauscherrohrleitung (16, 18, 20) zu variieren,
**dadurch gekennzeichnet, dass**
der Wärmeträger-Kondensatpegel (15) in der Wärmetauscherrohrleitung (16, 18, 20) für das Einspeisen von Wärme in die Vorrichtung (10) abgesenkt wird und für das Entnehmen von Wärme aus der Vorrichtung (10) angehoben wird.

18. Verfahren nach Anspruch 17, **dadurch gekennzeichnet, dass** die Vorrichtung zum Speichern von Wärme gemäß einem der Ansprüche 1 bis 11 ausgebildet ist.

## Claims

1. Device (10) for storing heat with a heat storage container (12) which contains heat storage medium (14) and which has an opening (72) for the passage of a fluid heat transfer medium (70) from and/or to a heat-consumer (64), wherein the heat storage container (12) has at least one heat exchanger pipe (16, 18, 20) which is thermally coupled to the heat storage medium (14), communicates with the opening (72) for the heat transfer medium (70) and is intended for the exchange of heat between the fluid heat transfer medium (70) and the heat storage medium (14), and the heat storage container (12) is connected to a condensate container (50) via a pipe (48) communicating with the at least one heat exchanger pipe (16, 18, 20), and wherein the at least one heat exchanger pipe (16, 18, 20) guides fluid heat transfer medium (70), which is moved out of the heat storage container (12) to the heat-consumer (64), from the bottom upwards through the heat storage medium (14), and guides fluid heat transfer medium (70), which, coming from the heat-consumer (64), flows through the opening (72) into the heat storage container (12), from the top downwards, **characterized in that** the pipe (48) communicating with the at least one heat exchanger pipe (16, 18, 20) protrudes to a bottom portion (52) of the condensate container (50), and a compressed-air compressor (58) and/or a vacuum pump (60) is provided for setting the pressure in the condensate container (50).

2. Device according to Claim 1, **characterized in that** the heat storage medium (214) contains at least one convection block (292) which weakens and/or suppresses the formation of a convection flow triggered by temperature differences in zones lying above one another in the heat storage medium (214).

3. Device according to Claim 2, **characterized in that** the at least one convection block is a grille (292) which is arranged in the heat storage medium (214) with respect to the at least one heat exchanger pipe (216, 218, 220).

4. Device according to one of Claims 1 to 3, **characterized in that** at least one heat store (22, 24, 26, 28) which is thermally coupled to the heat storage medium (14) is arranged in the heat storage container (12), said heat store, as a latent heat store for storing heat, containing a phase-changing material with a characteristic phase-changing temperature, and/or **in that** a plurality of heat stores (22, 24, 26, 28), which are thermally coupled to the heat storage medium (14), are arranged in the heat storage container (12) in layer zones (31, 33, 35, 37) through which the at least one heat exchanger pipe (16, 18, 20) passes and in which heat can be transmitted from the heat transfer medium (70) to the heat stores (22, 24, 26, 28), or vice versa, wherein the heat stores (22, 24, 26, 28) contain a phase-changing material which stores latent heat and the phase-temperature of said phase-changing material increases or is at least the same from one layer zone (31, 33) to the next layer zone (33, 35) along the at least one heat exchanger pipe (16, 18, 20) in the direction (38) pointing to the opening (72) for the passage of the fluid heat transfer medium (70).

5. Device according to Claim 4, **characterized in that** the phase-changing material in a heat store (22, 24, 26, 28) is lactitol dihyrate and/or sorbitol and/or lactitol and/or mannitol.

6. Device according to one of Claims 1 to 5, **characterized in that** the at least one heat exchanger pipe (616, 618, 620) is curved, in particular coiled, at least in sections, and/or **in that** the condensate container (50) is arranged below the heat storage container (12), and/or **in that** a discharge opening (54) with a valve (56) for the discharging of condensate is formed on the bottom portion (52) of the condensate container (50).

7. Device according to one of Claims 1 to 6, **characterized in that** the at least one heat exchanger pipe (16, 18, 20) is extended from a distribution space (44), which is formed in the heat storage container (12), for the fluid heat transfer medium (70) to a collecting space (46), which is formed in the heat storage container (12), for the fluid heat transfer medium.

8. Device according to Claim 6, **characterized in that** the heat storage container (12) contains a multiplicity of heat exchanger pipes (16, 18, 20) which are thermally coupled to the heat storage medium (14) and connect the distributing space (44) to the collecting space (46).

9. Device according to Claim 8, **characterized in that** the fluid heat transfer medium (70) is supplied into the distributing space (244) by a diffuser (288) which is designed as a fan of coaxial hollow cones or hollow funnels and which distributes fluid heat transfer medium (70) flowing with respect to the heat exchanger pipes (216, 218, 220) to the heat exchanger pipes (216, 218, 220).

10. Device according to Claim 7, **characterized in that** an impact plate (302) which swirls a fluid heat transfer medium (70) supplied to the heat storage container (12) and distributes said heat transfer medium (70) to the heat exchanger pipes (316, 318, 320) is arranged in the distributing space (244).

11. Device according to one of Claims 1 to 10, **characterized in that** a flow orifice (404) is arranged upstream of at least one of the heat exchanger pipes (416), said flow orifice swirling fluid heat transfer medium (70), which is supplied to the at least one heat exchanger pipe (416), in the at least one heat exchanger pipe (416), or **in that** a nozzle (574) is arranged upstream of at least one of the heat exchanger pipes (516), said nozzle swirling fluid heat transfer medium (70), which flows into the at least one heat exchanger pipe (516), in the at least one heat exchanger pipe (516) and bringing together the fluid heat transfer medium (70), which leaves the heat exchanger pipe (516), to form a jet (576), and/or in that the heat storage container (12) contains a liquid, in particular water or oil, as the heat storage medium (14), and/or the heat storage medium (14) stores sensible heat in the heat storage container (12), and/or **in that** the condensate container (50) is arranged below the heat storage container (12), and/or **in that** a discharge opening (54) with a valve (56) for the discharging of condensate is formed on the bottom portion (52) of the condensate container (50), and/or **in that** a cooled ribbed tube (62) for depositing condensable gases is arranged between a vacuum pump (60) for setting the pressure in the condensate container (50) and the condensate container (50).

12. Heat storage device (710) with two or more devices (710a, 710b, 810a, 810b, 910a, 910b), which are designed according to one of Claims 1 to 11, for storing heat.

13. Heat storage device (910) according to Claim 12, **characterized in that** a line system (902a, 902b) is provided with a valve arrangement (901a, 901b which makes it possible to connect either a first device (910a) for storing heat, a second device (910b) for storing heat, or the first device (910a) and the second device (910b) to a heat-consumer.

14. Heat storage device (810) with two or more devices (810a, 810b), which are designed according to one of Claims 1 to 11, for storing heat, **characterized in that** a line system (804a, 804b, 806a, 806b) is provided with a valve arrangement (805, 806) for the coupling of the condensate containers (850a, 850b), said valve arrangement enabling the pressure in the condensate containers (850a, 850b) to be set selectively either jointly or separately.

15. Plant comprising at least one heat-consumer which, for the transfer of heat, is connected by a line (63, 65) conducting vaporous heat transfer medium (70) to a device designed according to one of Claims 1 to 11.

16. Plant (100) comprising a device according to one of Claims 1 to 11 with a line (63, 65) which conducts heat transfer medium in the form of water vapour (70) for setting the temperature in a container (64) which is at least partially filled with water and/or steam and is preferably designed as a reaction container.

17. Method for operating a plant which comprises at least one heat-consumer (64) and, for the dispensing or supply of heat, is connected by a line (63, 65) conducting a vaporous heat transfer medium (70) to a device (10) for storing heat, said device comprising a heat storage container (12) which contains heat storage medium (14) and which has an opening (72) for the passage of a fluid heat transfer medium (70) from and/or to a heat-consumer (64), in which a heat-transfer-medium condensate level (15) is set in the at least one heat exchanger pipe (16, 18, 20), which is thermally coupled to the heat storage medium (14) and communicates with the opening (72) for the heat transfer medium (70), in order therefore to vary the temperature for condensing vaporous heat transfer medium (70) and/or for evaporating heat-transfer-medium condensate (55) in the at least one heat exchanger pipe (16, 18, 20), **characterized in that** the heat-transfer-medium condensate level (15) is lowered in the heat exchanger pipe (16, 18, 20) for feeding heat into the device (10) and is raised for removing heat from the device (10).

18. Method according to Claim 17, **characterized in that** the device for storing heat is designed according to one of Claims 1 to 11.

## Revendications

1. Dispositif (10) pour l'accumulation de chaleur comprenant un réservoir accumulateur de chaleur (12), qui contient un milieu accumulateur de chaleur (14) et qui comporte une ouverture (72) pour le passage d'un fluide caloporteur (70) en provenance et/ou en direction d'un utilisateur de chaleur (64), dans lequel au moins une conduite d'échangeur de chaleur (16, 18, 20), couplée thermiquement au milieu accumulateur de chaleur (14) et communiquant avec l'ouverture (72) pour le caloporteur (70), est formée dans le réservoir accumulateur de chaleur (12) pour l'échange de chaleur entre le fluide caloporteur (70) et le milieu accumulateur de chaleur (14) et le réservoir accumulateur de chaleur (12) est raccordé à un réservoir de condensat (50) par une conduite (48) communiquant avec ladite au moins une conduite d'échangeur de chaleur (16, 18, 20), et dans lequel ladite au moins une conduite d'échangeur de chaleur (16, 18, 20) guide le fluide caloporteur (70), qui se déplace du réservoir accumulateur de chaleur (12) en direction de l'utilisateur de chaleur (64), de bas en haut à travers le milieu accumulateur de chaleur (14) et guide de haut en bas le fluide caloporteur (70), qui s'écoule dans le réservoir accumulateur de chaleur (12) à travers l'ouverture (72) en provenance de l'utilisateur de chaleur (64), **caractérisé en ce que** la conduite (48) communiquant avec ladite au moins une conduite d'échangeur de chaleur (16, 18, 20) arrive jusqu'à une partie du fond (52) du réservoir de condensat (50) et il est prévu un compresseur à air comprimé (58) et/ou une pompe à vide (60) pour le réglage de la pression dans le réservoir de condensat (50).

2. Dispositif selon la revendication 1, **caractérisé en ce qu'**au moins une barrière de convection (292) est disposée dans le milieu accumulateur de chaleur (214), qui atténue et/ou empêche la formation d'un courant de convection provoqué par des différences de température de zones superposées dans le milieu accumulateur de chaleur (214).

3. Dispositif selon la revendication 2, **caractérisé en ce que** ladite au moins une barrière de convection est une grille (292) disposée dans le milieu accumulateur de chaleur (214) vers ladite au moins une conduite d'échangeur de chaleur (216, 218, 220).

4. Dispositif selon l'une quelconque des revendications 1 à 3, **caractérisé en ce qu'**au moins un accumulateur de chaleur (22, 24, 26, 28), couplé thermiquement au milieu accumulateur de chaleur (14), est disposé dans le réservoir accumulateur de chaleur (12) et contient, pour l'accumulation de chaleur sous la forme d'un accumulateur de chaleur latente, un matériau à changement de phase présentant une température de changement de phase caractéristique, et/ou **en ce que** plusieurs accumulateurs de chaleur (22, 24, 26, 28), couplés thermiquement avec le milieu accumulateur de chaleur (14), sont disposés dans le réservoir accumulateur de chaleur (12) dans des zones stratifiées (31, 33, 35, 37) traversées par ladite au moins une conduite d'échangeur de chaleur (16, 18, 20), dans lesquels de la chaleur peut être transférée du caloporteur (70) aux accumulateurs de chaleur (22, 24, 26, 28) ou inversement, dans lequel les accumulateurs de chaleur (22, 24, 26, 28) contiennent un matériau à changement de phase accumulant la chaleur latente et la température de changement de phase du matériau à changement de phase augmente ou reste au moins égale, d'une zone stratifiée (31, 33) à la zone stratifiée suivante (33, 35), le long de ladite au moins une conduite d'échangeur de chaleur (16, 18, 20) dans la direction (38) orientée vers l'ouverture (72) pour le passage du fluide caloporteur (70).

5. Dispositif selon la revendication 4, **caractérisé en ce que** le matériau à changement de phase dans un accumulateur de chaleur (22, 24, 26, 28) est un dihydrate de lactitol et/ou la sorbite et/ou le lactitol et/ou la mannite.

6. Dispositif selon l'une quelconque des revendications 1 à 5, **caractérisé en ce que** ladite au moins une conduite d'échangeur de chaleur (616, 618, 620) est au moins localement courbée, en particulier enroulée en spirale, et/ou **en ce que** le réservoir de condensat (50) est disposé en dessous du réservoir accumulateur de chaleur (12), et/ou **en ce qu'**une ouverture d'évacuation (54) avec une soupape (56) est formée dans la partie du fond (52) du réservoir de condensat (50) pour l'évacuation du condensat.

7. Dispositif selon l'une quelconque des revendications 1 à 6, **caractérisé en ce que** ladite au moins une conduite d'échangeur de chaleur (16, 18, 20) s'étend depuis une chambre de répartition (44) pour le fluide caloporteur (70) formée dans le réservoir accumulateur de chaleur (12) jusqu'à une chambre de collecte (46) pour le fluide caloporteur formée dans le réservoir accumulateur de chaleur (12).

8. Dispositif selon la revendication 6, **caractérisé en ce que** le réservoir accumulateur de chaleur (12) contient une multiplicité de conduites d'échangeur de chaleur (16, 18, 20) couplées thermiquement au milieu accumulateur de chaleur (14), qui relient la chambre de répartition (44) à la chambre de collecte (46).

9. Dispositif selon la revendication 8, **caractérisé en ce que** le fluide caloporteur (70) est fourni dans la chambre de répartition (244) à travers un diffuseur (288) réalisé sous la forme d'un éventail de cônes creux ou d'entonnoirs creux coaxiaux, qui répartit un fluide caloporteur (70) s'écoulant vers les conduites d'échangeur de chaleur (216, 218, 220) sur les conduites d'échangeur de chaleur (216, 218, 220).

10. Dispositif selon la revendication 7, **caractérisé en ce qu'**un déflecteur (302) est disposé dans la chambre de répartition (244), qui agite un fluide caloporteur (70) fourni au réservoir accumulateur de chaleur (12) et qui le répartit sur les conduites d'échangeur de chaleur (316, 318, 320).

11. Dispositif selon l'une quelconque des revendications 1 à 10, **caractérisé en ce qu'**un écran d'écoulement (404) est disposé devant au moins une des conduites d'échangeur de chaleur (416), qui agite le fluide caloporteur (70) fourni à ladite au moins une conduite d'échangeur de chaleur (416) dans ladite au moins une conduite d'échangeur de chaleur (416) ou **en ce qu'**une buse (574) est disposée devant au moins une des conduites d'échangeur de chaleur (516), qui agite le fluide caloporteur (70) s'écoulant dans ladite au moins une conduite d'échangeur de chaleur (516) dans ladite au moins une conduite d'échangeur de chaleur (516) et qui rassemble le fluide caloporteur (70), qui quitte la conduite d'échangeur de chaleur (516), en un jet (576), et/ou **en ce que** le réservoir accumulateur de chaleur (12) contient un liquide, en particulier de l'eau ou de l'huile, comme milieu accumulateur de chaleur (14), et/ou le milieu accumulateur de chaleur (14) dans le réservoir accumulateur de chaleur (12) accumule de la chaleur sensible, et/ou **en ce que** le réservoir de condensat (50) est disposé en dessous du réservoir accumulateur de chaleur (12), et/ou **en ce qu'**une ouverture d'évacuation (54) avec une soupape (56) est formée dans la partie du fond (52) du réservoir de condensat (50) pour l'évacuation du condensat, et/ou **en ce qu'**un tube à ailettes refroidi (62) est disposé entre une pompe à vide (60) pour le réglage de la pression dans le réservoir de condensat (50) et le réservoir de condensat (50), pour la précipitation des gaz condensables.

12. Dispositif accumulateur de chaleur (710) comportant deux ou plusieurs dispositifs (710a, 710b, 810a, 810b, 910a, 910b) réalisés selon l'une quelconque des revendications 1 à 11 pour l'accumulation de chaleur.

13. Dispositif accumulateur de chaleur (910) selon la revendication 12, **caractérisé en ce qu'**il est prévu un système de conduites (902a, 902b) avec un agencement de soupapes (901a, 901b), qui permet de relier à un utilisateur de chaleur soit un premier dispositif (910a) pour accumuler de la chaleur, soit un deuxième dispositif (910b) pour accumuler de la chaleur soit le premier dispositif (910a) et le deuxième dispositif (910b).

14. Dispositif accumulateur de chaleur (810) comportant deux ou plusieurs dispositifs (810a, 810b) réalisés selon l'une quelconque des revendications 1 à 11 pour accumuler de la chaleur, **caractérisé en ce qu'**il est prévu un système de conduites (804a, 804b, 806a, 806b) avec un agencement de soupapes (805, 806) pour le couplage des réservoirs de condensat (850a, 850b), qui permet au choix un réglage commun ou séparé l'un de l'autre de la pression dans les réservoirs de condensat (850a, 850b).

15. Installation comprenant au moins un utilisateur de chaleur, qui est raccordé à un dispositif réalisé selon l'une quelconque des revendications 1 à 11 pour le transfert de chaleur par une conduite (63, 65) transportant un caloporteur sous forme de vapeur (70).

16. Installation (100) comportant un dispositif selon l'une quelconque des revendications 1 à 11 avec une conduite (63, 65) transportant un caloporteur sous forme de vapeur d'eau (70) pour le réglage de la température dans un réservoir (64) rempli au moins en partie d'eau et/ou de vapeur, de préférence réalisé sous la forme d'un réservoir de réaction.

17. Procédé pour conduire une installation présentant au moins un utilisateur de chaleur (64), qui est raccordé, pour prélever ou fournir de la chaleur avec une conduite (63, 65) transportant un caloporteur sous forme de vapeur (70), à un dispositif (10) pour accumuler de la chaleur, qui comprend un réservoir accumulateur de chaleur (12), qui contient un milieu accumulateur de chaleur (14) et qui comporte une ouverture (72) pour le passage d'un fluide caloporteur (70) en provenance et/ou en direction d'un utilisateur de chaleur (64), dans lequel, dans ladite au moins une conduite d'accumulateur de chaleur (16, 18, 20) couplée thermiquement avec le milieu accumulateur de chaleur (14) et communiquant avec l'ouverture (72) pour le caloporteur (70), on règle le niveau de condensat de caloporteur (15), afin de faire varier ainsi la température pour la condensation de caloporteur sous forme de vapeur (70) et/ou pour la vaporisation de condensat de caloporteur (55) dans ladite au moins une conduite d'échangeur de chaleur (16, 18, 20), **caractérisé en ce que** l'on abaisse le niveau de condensat de caloporteur (15) dans la conduite d'échangeur de chaleur (16, 18, 20) pour l'apport de chaleur dans le dispositif (10) et on l'élève pour le prélèvement de chaleur hors du dispositif (10).

18. Procédé selon la revendication 17, **caractérisé en ce que** le dispositif pour accumuler de la chaleur est réalisé selon l'une quelconque des revendications 1 à 11.
